# EUROPEAN PATENT APPLICATION

(11) **EP 4 141 049 A1**
(43) Date of publication of application: **01.03.2023**
(21) Application number: 21792026.3
(22) Date of filing: 25.03.2021
(51) Int. Cl.: C08G 77/14, C08L 83/04, C09D 183/04, C09D 7/20

(54) **COMPOSITION CONTAINING ORGANOPOLYSILOXANE, PRODUCTION METHOD THEREFOR, COATING MATERIAL, AND COATED ARTICLE**

(30) Priority: 22.04.2020 JP 2020075796
(71) Applicant: SHIN-ETSU CHEMICAL CO., LTD., Tokyo 1000005 (JP)
(72) Inventor: ASO Fumihiro, Annaka-shi, Gunma 379-0224 (JP); FUJIMOTO Takuya, Annaka-shi, Gunma 379-0224 (JP); NEGISHI Kazuyuki, Annaka-shi, Gunma 379-0224 (JP)
(74) Representative: Mewburn Ellis LLP
(86) International application number: PCT/JP2021/012499
(87) International publication number: WO 2021/215186

(57) **Abstract**

A composition comprising (A) an organopolysiloxane having a structure represented by the following average formula (I) and a given amount of (B) a solvent having a relative permittivity of 7.0-9.0. 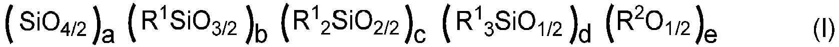 (In the formula, R¹ is a hydrogen atom or an alkyl, aralkyl, or aryl group; R² is a hydrogen atom or a methyl, ethyl, n-propyl, isopropyl, or acetyl group; a, b, c, and d are numbers satisfying 0 ≤ a < 1, 0 < b ≤ 1, 0 ≤ c < 1, 0 ≤ d < 1, and a+b+c+d = 1; and e is a number satisfying 0 < e ≤ 4.)

## Description

### TECHNICAL FIELD

The present invention relates to a composition which includes an organopolysiloxane and an alkylene glycol alkyl ether acetate or other solvent having a given relative permittivity, to a method of preparing the composition, to a coating material and to a coated article.

### BACKGROUND ART

Goals for sustainable development (SDGs) were spelled out at a United Nations summit in September 2015 and there is growing interest throughout the world in environmental preservation and maintaining a safe living environment. Looking at the amount of volatile organic compounds (VOCs) released annually within Japan by industrial sector, paints and coatings accounted for 38% of such discharges in 2017, which is a far greater proportion than in other sectors. Accordingly, there is a strong desire in the paint industry for environmentally friendly paints which generate few environmental contaminants such as photochemical smog and which, by being low-temperature curing or rapid curing, can be applied in an energy efficient manner.

Solvents such as toluene and xylene (TX solvents) are commonly used in organosiloxane-containing coatings because of their high solvency. However, of the many solvents that exist, TX solvents have an exceptionally large impact on the environment and also have an anesthetic effect on the human body, in addition to which they are highly toxic and have been designated as deleterious substances in the Poisonous and Deleterious Substances Control Law. Hence, there exists a need in the near term for alternative solvents.

The environmentally friendly alkylene glycol alkyl ether acetate solvents, owing to their low impact on people and nature and the fact that they are easy to handle, are TX-free solvents whose usage in recent years has been trending upward. Moreover, these solvents have high boiling points, as a result of which adverse effects on the human body due to exposure to solvent gases is limited. In addition, because these solvents have a low volatility, they are very easy to work with, and cracks and uneven coating do not readily arise in the applied film. Hence, they are suitable for use as solvents in coatings.

Separately, in the case of organopolysiloxanes which have polymerizable functional groups, from the standpoint of hardness and flexibility, organopolysiloxanes having divalent or trivalent siloxane bonds on the skeleton are often used as the chief raw material in coatings. In particular, trivalent siloxane bonds are essential in terms of hardness and adhesion to the underlying material.

The condition at the surface of the film following application varies with the molecular weight of the organopolysiloxane. When the molecular weight is small, the ratio of the number of polymerizable functional groups increases, becoming a cause of crack formation over time. When the molecular weight is large, most high-activity alkoxy groups are consumed by hydrolytic condensation reactions at the time of production; only a few low-activity alkoxy groups remain on the organopolysiloxane product, and so the film often has a poor curability. In order to compensate for such low curability, additional steps such as heating at a high temperature at the time of film formation are required.

Patent Document 1 reports that, in applied films of silicone resin compositions having a ratio of condensation-curable functional groups within a specific range, good adhesion with the surface of the applied film can be obtained. Patent Document 2 reports on examples of low-VOC paint compositions in which alkylene glycol alkyl ether acetates are used as the solvent, and suggests the appearance of good curing and pot life properties.

These and other prior art documents relating to the invention are listed below.

### PRIOR ART DOCUMENTS

### PATENT DOCUMENTS

Patent Document 1: JP-A 2005-200546
Patent Document 2: JP-A 2007-530734
Patent Document 3: WO 2020/036074 A1

### SUMMARY OF INVENTION

### TECHNICAL PROBLEM

In light of the above circumstances, the objects of the invention are to provide a composition which contains a TX-free environmentally friendly solvent and an organopolysiloxane, a method for preparing such a composition, a coating material that has excellent low-temperature curability, excellent solvent resistance and is able to provide a cured film having a high hardness, and a coated article.

### SOLUTION TO PROBLEM

The inventors have conducted intensive investigations aimed at attaining these objects and have found as a result that the above challenges can be resolved by using a composition which includes an organopolysiloxane having polymerizable functional groups and an alkylene glycol alkyl ether acetate or other solvent having a given relative permittivity. This discovery ultimately led to the present invention.

Accordingly, the present invention provides the following:
1. A composition which includes (A) an organopolysiloxane having a structure of average formula (I) below and (B) at least 15 wt% of a solvent having a relative permittivity of at least 7.0 and not more than 9.0 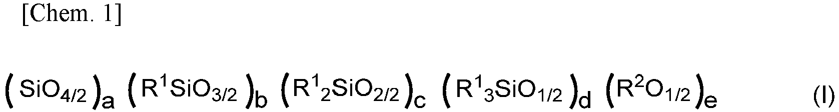 (wherein each R¹ is independently a hydrogen atom or an alkyl, aralkyl or aryl group of 1 to 8 carbon atoms which may be substituted with a halogen atom; R² is a hydrogen atom, methyl group, ethyl group, n-propyl group, i-propyl group or acetyl group; a, b, c and d are respectively numbers which satisfy the conditions 0 ≤ a < 1, 0 < b ≤ 1, 0 ≤ c < 1, 0 ≤ d < 1 and a+b+c+d = 1; and e is a number which satisfies the condition 0 < e ≤ 4);
2. The composition of 1 above, wherein the solvent (B) includes a compound of general formula (II) below 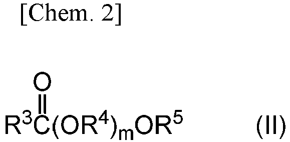 (wherein R³ is an alkyl group of 1 to 4 carbon atoms, R⁴ is a linear or branched alkylene group of 1 to 4 carbon atoms, R⁵ is an alkyl group of 1 to 4 carbon atoms or a group of the following formula 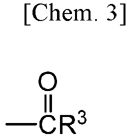 (wherein R³ is the same as above), and m is an integer from 1 to 3);
3. The composition of 1 or 2 above, wherein the organopolysiloxane (A) has a weight-average molecular weight of from 1,000 to 500,000;
4. The composition of any of 1 to 3 above which is a curable composition that further comprises a curing catalyst;
5. A coating material which includes the composition of any of 1 to 4 above;
6. A cured film of the coating material of 5 above;
7. A coated article which includes a substrate and, formed on at least one side of the substrate, either directly or over one or more other layer, the cured film of 6 above; and
8. A method for preparing the composition of any of 1 to 4 above, which method includes the steps of synthesizing (A) the organopolysiloxane having a structure of average formula (I) by hydrolytically condensing a silane compound having a hydrolyzable group in the absence of (B) a solvent having a relative permittivity of at least 7.0 and not more than 9.0; and subsequently adding (B) the solvent having a relative permittivity of at least 7.0 and not more than 9.0.

### ADVANTAGEOUS EFFECTS OF INVENTION

The inventive composition contains an organopolysiloxane having polymerizable functional groups and an alkylene glycol alkyl ether acetate or other solvent having a given relative permittivity. As a result, its impact on the human body and ecology and on the global environment is reduced or mitigated, in addition to which it has excellent low-temperature curability and solvent resistance and gives a high-hardness film, making the composition useful as an environmentally friendly coating.

### DESCRIPTION OF EMBODIMENTS

The present invention is described in detail below.

### [Component (A)]

Component (A) used in the inventive composition is an organopolysiloxane having a structure of average formula (I) below.

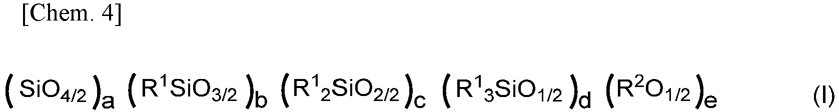

In formula (I), each R¹ is independently a hydrogen atom or an alkyl, aralkyl or aryl group of 1 to 8 carbon atoms which may be substituted with a halogen atom; and R² is a hydrogen atom, methyl group, ethyl group, n-propyl group, i-propyl group or acetyl group.

In R¹, the alkyl group of 1 to 8 carbon atoms may be linear, branched or cyclic. Specific examples include methyl, ethyl, n-propyl, i-propyl, n-butyl, i-butyl, tert-butyl, neopentyl, n-hexyl, cyclohexyl, n-heptyl and n-octyl groups. An alkyl group of 1 to 3 carbon atoms is preferred. Methyl and ethyl groups are more preferred.

The number of carbon atoms on the aralkyl group is preferably from 7 to 20. Specific examples include benzyl and phenylethyl groups.

The number of carbon atoms on the aryl group is preferably from 6 to 18. Specific examples include unsubstituted aryl groups such as phenyl and naphthyl groups; and alkylaryl groups of 7 to 18 carbon atoms such as tolyl, xylyl, ethylphenyl, propylphenyl, butylphenyl, pentylphenyl, hexylphenyl, heptylphenyl, octylphenyl, nonylphenyl, decylphenyl, undecylphenyl and dodecylphenyl groups. A phenyl group is preferred.

Some or all hydrogen atoms on the alkyl group, aralkyl group and aryl group may be substituted with halogen atoms (fluorine, chlorine, bromine and iodine atoms). Specific examples include chloromethyl, chloropropyl, bromoethyl, trifluoropropyl, chlorophenyl and bromophenyl groups.

The subscript 'a' is a number which satisfies the condition 0 ≤ a < 1. From the standpoint of the crack suppressing effects, it is preferable for 0 ≤ a ≤ 0.3.

The subscript 'b' is a number which satisfies the condition 0 < b ≤ 1. From the standpoint of the scuff resistance of the resulting cured product, it is preferable for 0.2 ≤ b ≤ 1.

The subscript 'c' is a number which satisfies the condition 0 ≤ c < 1. From the standpoint of the curability of the composition and the hardness of the resulting cured product, it is preferable for 0 ≤ c ≤ 0.5.

The subscript 'd' is a number which satisfies the condition 0 ≤ d < 1. From the standpoint of the curability of the composition and the hardness of the resulting cured product, it is preferable for 0 ≤ d ≤ 0.4.

The subscript `e' is a number which satisfies the condition 0 < e ≤ 4. To be effective in suppressing condensation reactions by the condensable functional groups, and also from the standpoint of the cracking resistance, water resistance and weather resistance of the resulting cured product, e is preferably a number that satisfies the condition 0 < e ≤ 3.

Also, a+b+c+d = 1.

The organopolysiloxane (A) of the invention may be a compound of a single composition or may be a mixture of a plurality of compounds of differing compositions.

The weight-average molecular weight of the organopolysiloxane (A) of the invention is not particularly limited, although the polystyrene-equivalent weight-average molecular weight as determined by gel permeation chromatography (GPC) is preferably from 1,000 to 500,000, and more preferably from 1,500 to 300,000. At a weight-average molecular weight below 1,000, condensation may not fully proceed and the shelf stability of the organopolysiloxane may decrease. Also, condensation reactions may arise over time, and so there is a possibility that the cracking resistance may not be very good. At a high molecular weight greater than 500,000, the organopolysiloxane compound becomes insoluble in solvents and defects such as surface irregularity and uneven coating may arise.

The organopolysiloxane (A) of the invention preferably has, excluding the solvent, etc., a nonvolatiles content of at least 90 wt%. A higher level of volatiles may worsen the appearance or cause a decrease in the mechanical properties due to void formation during curing of the composition.

The component (A) content (pure component (A) containing no solvent) is from 10 to 95 wt%, preferably from 10 to 85 wt%, more preferably from 20 to 80 wt%, and even more preferably from 60 to 80 wt%, of the composition. When the component (A) content (as nonvolatile matter) is less than 10 wt%, a cured product of sufficient thickness may not be obtainable after coating. When it exceeds 95 wt%, the composition may not give a smooth cured product.

The organopolysiloxane (A) of the invention can be produced by a common method for producing organopolysiloxanes. For example, the organopolysiloxane of the invention may be obtained by the hydrolytic condensation of a silane compound having hydrolyzable groups.

The starting material for producing the organopolysiloxane is not particularly limited so long as it is a silane compound having from one to four chloro or alkoxy groups as hydrolyzable groups on silicon atoms and having an organic substituent that satisfies the above conditions.

Specific examples include tetrachlorosilane, tetramethoxysilane, tetraethoxysilane, tetraisopropoxysilane, tetrabutoxysilane, methyltrichlorosilane, methyltrimethoxysilane, methyltriethoxysilane, methyltriisopropoxysilane, methyltributoxysilane, dimethyldimethoxysilane, dimethyldiethoxysilane, dimethyldiisopropoxysilane, trimethylchlorosilane, trimethylmethoxysilane, trimethylethoxysilane, trimethylisopropoxysilane, ethyltrichlorosilane, ethyltrimethoxysilane, ethyltriethoxysilane, propyltrichlorosilane, propyltrimethoxysilane, propyltriethoxysilane, butyltrichlorosilane, butyltrimethoxysilane, butyltriethoxysilane, hexyltrichlorosilane, hexyltrimethoxysilane, hexyltriethoxysilane, phenyltrichlorosilane, phenyltrimethoxysilane, phenyltriethoxysilane, cyclohexyltrichlorosilane, cyclohexyltrimethoxysilane, cyclohexyltriethoxysilane, propylmethyldichlorosilane, propylmethyldimethoxysilane, propylmethyldiethoxysilane, hexylmethyldichlorosilane, hexylmethyldimethoxysilane, hexylmethyldiethoxysilane, phenylmethyldichlorosilane, phenylmethyldimethoxysilane, phenylmethyldiethoxysilane, diphenyldichlorosilane, diphenyldimethoxysilane, diphenyldiethoxysilane, dimethylphenylchlorosilane, dimethylphenylmethoxysilane, dimethylphenylethoxysilane, and partial hydrolyzates of these. In terms of handleability, ease of distilling off by-products and availability of the starting material, the use of methoxysilane or ethoxysilane is preferred.

One of these silane compounds may be used alone or two or more may be used in combination.

A hydrolysis catalyst may be used when carrying out hydrolysis. A known catalyst may be used as the hydrolysis catalyst, with the use of an aqueous solution thereof that has an acidity of pH 2 to 7 being preferred. In particular, acidic hydrogen halides, sulfonic acids, carboxylic acids, acidic or weakly acidic inorganic salts, and solid acids such as ion exchange resins are preferred. Specific examples of acidic catalysts include hydrogen fluoride, hydrochloric acid, nitric acid, sulfuric acid, methanesulfonic acid, p-toluenesulfonic acid, formic acid, acetic acid, maleic acid, benzoic acid, lactic acid, phosphoric acid, and cation exchange resins having sulfonic acid or carboxylic acid groups on the surface.

The amount of hydrolysis catalyst used is not particularly limited. However, to have the reaction proceed quickly and also taking into consideration the ease of removing the catalyst after the reaction, an amount within the range of 0.0002 to 0.5 mole per mole of hydrolyzable silane is preferred.

The ratio between the amount of hydrolyzable silane and the amount of water required for the hydrolytic condensation reaction is not particularly limited. However, to prevent catalyst deactivation and have the reaction proceed to a sufficient degree, and also taking into consideration the ease of removing water following the reaction, a ratio of from 0.1 to 10 moles of water per mole of hydrolyzable silane is preferred.

The reaction temperature during hydrolytic condensation is not particularly limited. However, to increase the rate of conversion and also prevent degradation of the organic functional groups on the hydrolyzable silane, a temperature of between -10°C and 150°C is preferred.

A solvent may be used during the hydrolytic condensation reaction, although the subsequently described solvent (B) is not used at this time. Examples of organic solvents that may be used include methanol, ethanol, propanol, acetone, methyl ethyl ketone, methyl isobutyl ketone, tetrahydrofuran, toluene and xylene. When these organic solvents have been used, it is desirable to remove them by treatment such as a stripping operation and replace them with component (B).

### [Component (B)]

Component (B) used in the inventive composition is a solvent having a relative permittivity of at least 7.0 and not more than 9.0. It is preferable for an alkylene glycol alkyl ether ester or alkylene glycol ester of general formula (II) below, for example, to be included as the solvent having such a relative permittivity. Component (B) may be of one type used alone or of two or more types used in suitable combination. The relative permittivity in this invention is a value measured at a temperature of 20°C in accordance with JIS C 2138:2007.

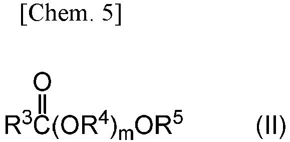

In formula (II), R³ is an alkyl group of 1 to 4 carbon atoms, R⁴ is a linear or branched alkylene group of 1 to 4 carbon atoms, and R⁵ is an alkyl group of 1 to 4 carbon atoms or a group of the following formula.

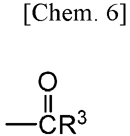

Specific examples of the alkyl groups of 1 to 4 carbon atoms represented by R³ and R⁵ include methyl, ethyl, n-propyl and n-butyl groups. Specific examples of the alkylene group of 1 to 4 carbon atoms represented by R⁴ include methylene, ethylene, trimethylene, propylene and butylene groups. When there are a plurality of -COR³ groups, these may be mutually like or unlike. The subscript `m' is an integer from 1 to 3.

Specific examples of the solvent of general formula (II) include glycol monofatty acid esters such as ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, propylene glycol monomethyl ether acetate, dipropylene glycol monomethyl ether acetate, ethylene glycol monomethyl ether propionate, ethylene glycol monoethyl ether propionate, ethylene glycol monobutyl ether propionate, diethylene glycol monomethyl ether propionate, diethylene glycol monoethyl ether propionate, diethylene glycol monobutyl ether propionate, propylene glycol monomethyl ether propionate, dipropylene glycol monomethyl ether propionate, ethylene glycol monomethyl ether butyrate, ethylene glycol monoethyl ether butyrate, ethylene glycol monobutyl ether butyrate, diethylene glycol monomethyl ether butyrate, diethylene glycol monoethyl ether butyrate, diethylene glycol monobutyl ether butyrate, propylene glycol monomethyl ether butyrate, dipropylene glycol monomethyl ether butyrate and methoxylbutyl acetate; and glycol difatty acid esters such as ethylene glycol diacetate, diethylene glycol diacetate, propylene glycol diacetate, dipropylene glycol diacetate, ethylene glycol acetate propionate, ethylene glycol acetate butyrate, ethylene glycol propionate butyrate, ethylene glycol dipropionate, ethylene glycol dibutyrate, diethylene glycol acetate propionate, diethylene glycol acetate butyrate, diethylene glycol propionate butyrate, diethylene glycol dipropionate, diethylene glycol dibutyrate, propylene glycol acetate propionate, propylene glycol acetate butyrate, propylene glycol propionate butyrate, propylene glycol dipropionate, propylene glycol dibutyrate, dipropylene glycol acetate propionate, dipropylene glycol acetate butyrate, dipropylene glycol propionate butyrate, dipropylene glycol dipropionate and dipropylene glycol dibutyrate.

Of these, from the standpoint of chemical stability, availability and impact on the environment, ethylene glycol monobutyl ether acetate and propylene glycol monomethyl ether acetate are preferred.

The content of component (B) is at least 15 wt%, preferably from 15 to 50 wt%, and more preferably from 20 to 40 wt%, of the composition. At a component (B) content below 15 wt% of the composition, a smooth cured product cannot be obtained.

It is preferable for the inventive composition to include substantially no TX solvents. As used herein, "TX solvents" refers to aromatic hydrocarbon solvents such as toluene and xylene. Also, "to include substantially no TX solvents" means that the TX solvent content is 2.0 wt% or less of the composition. The TX solvent content is preferably 0.5 wt% or less, and may be 0 wt%.

Optional additives may be suitably included in the composition of the invention within ranges that do not detract from the advantageous effects of the invention.

Specific examples of such additives include tackifiers such as non-reactive silicone oils, reactive silicone oils and silane coupling agents, antidegradants, rust inhibitors, colorants, surfactants, rheology modifiers, ultraviolet absorbers, infrared absorbers, fluorescent agents, abrasives, scents, loading materials, fillers, dyes and pigments, leveling agents, reactive diluents, non-reactive polymer resins, antioxidants, ultraviolet absorbers, light stabilizers, antifoaming agents, dispersants, antistatic agents and thixotropic agents. Each of these may be of one type used alone, or two or more types may be suitably combined and used in appropriate amounts.

The viscosity of the inventive composition is not particularly limited. However, for good molding and coating workability and to suppress the occurrence of streak-like unevenness, the viscosity at 25°C as measured with a rotational viscometer is preferably not more than 100,000 mPa s, and more preferably not more than 20,000 mPa s. The lower limit, although not particularly defined, is preferably about 10 mPa·s.

### [Curable Composition]

The inventive composition, by drying at room temperature and under heating conditions, can form a film. However, to accelerate the rate of cure or to obtain excellent film properties, a curing catalyst such as a condensation curing catalyst may be added, or the composition may be prepared as a curable composition that additionally includes a curing catalyst.

The curing catalyst may be suitably selected from among known catalysts and used. Exemplary curing catalysts include organometallic compounds such as organotin compounds, organotitanium compounds, organozirconium compounds and organoaluminum compounds; inorganic acids such as hydrochloric acid and sulfuric acid; organic acids such as p-toluenesulfonic acid and various aliphatic or aromatic carboxylic acids; ammonia; inorganic bases such as sodium hydroxide; and organic bases such as tributylamine, 1,5-diazabicyclo[4.3.0]-5-nonene (DBN) and 1,8-diazabicyclo[5.4.0]-7-undecene (DBU). These may be used singly, or a plurality may be used together.

Of these, organometallic compounds selected from among organotin compounds, organotitanium compounds and organoaluminum compounds are preferred in the inventive composition. Preferred examples include dibutyltin dilaurate, dibutyltin dioctoate, dibutyltin diacetate, dioctyltin dilaurate, dioctyltin dioctoate, dioctyltin diacetate, dibutyltin bis(acetylacetate), dioctyltin bisacetyllaurate, tetrabutyl titanate, tetranonyl titanate, tetrakis(ethylene glycol) methyl ether titanate, tetrakis(ethylene glycol) ethyl ether titanate, bis(acetylacetonyl) dipropyl titanate, acetylacetone aluminum, aluminum bis(ethyl acetoacetate) mono-n-butyrate, aluminum ethyl acetoacetate di-n-butyrate and aluminum tris(ethyl acetoacetate). In particular, from the standpoint of the reactivity and solubility, tetrabutyl titanate, aluminum ethyl acetoacetate di-n-butyrate, aluminum bis(ethyl acetoacetate) mono-n-butyrate and hydrolyzates of these are preferred.

The curing catalyst content per 100 parts by weight of the organopolysiloxane (A) is preferably from 0.01 to 30 parts by weight, and more preferably from 0.5 to 10 parts by weight.

### [Method of Production]

The inventive composition can be obtained by mixing together above components (A) and (B) and also any optional ingredients. In cases where a solvent is used during hydrolytic condensation when preparing component (A), the organopolysiloxane (A) of average formula (I) can be obtained by, for example, effecting the hydrolytic condensation of a hydrolyzable group-containing silane compound within a solvent. Component (B) cannot be used as the reaction solvent at this time.

Component (B) accounts for a proportion of the overall solvent within the composition that is preferably from 20 to 100 wt%, and more preferably from 50 to 100 wt%; the solvent may consist solely of component (B). Specific examples of organic solvents other than solvent (B) include methanol, ethanol, propanol, acetone, methyl ethyl ketone, methyl isobutyl ketone, tetrahydrofuran, toluene and xylene. In cases where such organic solvents have been used, the method of preparing the inventive composition may include the step of removing the organic solvents by a stripping operation and replacing them with component (B).

### [Coating Material and Coated Article]

The above-described composition of the invention may be suitably used as a coating material, and is especially well-suited for use as an exterior wall coating, although applicable uses for the composition are not limited to coating materials. When the inventive composition is to be used as a coating material, for example, by applying the composition onto at least one side of a substrate, either directly or over one or more other layer, and then curing the applied composition so as to form a film, a coated article having a cured film of the coating material formed on at least one side of the substrate, either directly or over one or more other layer, can be obtained.

Examples of the substrate include, but are not particularly limited to, glass, silicon wafers, metals, plastic molded bodies, ceramics, and composites of these.

Use can also be made of any of these substrates in which the surface has been chemical conversion treated, corona discharge treated, plasma treated or treated with an acid or alkali solution, and decorative plywood in which the substrate main body and surface layer are covered with different types of coatings. The other layer or layers are exemplified by layers obtained by polyester resin coating, polyurethane resin coating, amino alkyd resin coating, lacquer coating, spray coating and aqueous wax coating.

A known technique may be suitably selected as the method for applying the coating material onto a substrate. Various types of coating methods may be used, including, for example, flow coating, spin coating, bar coating, wire bar coating, brush coating, spraying, dip coating, roll coating, curtain coating and knife coating. The coating amount is not particularly limited, although an amount such that the thickness of the film after drying is preferably from 0.1 to 1,000 µm, and more preferably from 1 to 100 µm, is generally desirable.

Examples of methods for curing the composition include room-temperature curing and heat curing.

The heating temperature, although not particularly limited, is preferably between 100°C and 300°C, and more preferably between 150°C and 250°C.

### EXAMPLES

Examples and Comparative Examples are given below to more concretely illustrate the invention, although the invention is not limited by these Examples.

In the Examples below, the viscosities are values measured at 25°C using a rotational viscometer, the nonvolatile contents are values measured in accordance with JIS K 5601-1-2:2008, and the weight-average molecular weights are values measured with a gel permeation chromatography (GPC) system (HLC-8220, from Tosoh Corporation) and using tetrahydrofuran (THF) as the developing solvent. The values of "a" to "e" in average formula (I) were calculated from ¹H-NMR and ²⁹Si-NMR measurement results.

### [1] Preparation of Compositions Containing Organopolysiloxane and Alkylene Glycol Alkyl Ether Acetate Solvent

### [Example 1-1]

Hexamethyldisiloxane (from Tokyo Chemical Industry Co., Ltd.) in an amount of 32.5 g (0.2 mol), 299.0 g (2.0 mol) of methyltrimethoxysilane (KBM-13, from Shin-Etsu Chemical Co., Ltd.), 387.1 g (3.0 mol) of dimethyldimethoxysilane (KBM-22, from Shin-Etsu Chemical Co., Ltd.), 803.7 g (3.8 mol) of phenyltrimethoxysilane (KBM-103, from Shin-Etsu Chemical Co., Ltd.), 25.3 g (0.1 mol) of diphenyldimethoxysilane (KBM-202, from Shin-Etsu Chemical Co., Ltd.) and 4.9 g of methanesulfonic acid were blended in a reactor until uniform, at which point 254.9 g of deionized water was added and the mixture was stirred at 80°C for 2 hours. Neutralization was then carried out by adding 24.3 g of synthetic hydrotalcite and stirring for 2 hours. Next, 984.8 g of propylene glycol monomethyl ether acetate (Dow Chemical Company; relative permittivity at 20°C, 8.3) was added, volatile constituents such as methanol were distilled off under reduced pressure, and filtration under applied pressure was carried out.

The resulting composition was a liquid which had a viscosity of 12.7 mPa s, a nonvolatiles content of 51.1 wt% and, excluding the solvent, a silicone component weight-average molecular weight of 3,500. The values of "a" to "e" in average formula (I) were respectively a = 0, b = 0.64, c = 0.33, d = 0.03 and e = 0.13.

### [Example 1-2]

Hexamethyldisiloxane (Tokyo Chemical Industry Co., Ltd.) in an amount of 32.4 g (0.2 mol), 672.8 g (4.5 mol) of methyltrimethoxysilane (KBM-13, from Shin-Etsu Chemical Co., Ltd.), 507.8 g (2.4 mol) of phenyltrimethoxysilane (KBM-103, from Shin-Etsu Chemical Co., Ltd.) and 3.5 g of methanesulfonic acid were blended in a reactor until uniform, at which point 222.3 g of deionized water was added and the mixture was stirred at 80°C for 2 hours. Neutralization was then carried out by adding 18.5 g of synthetic hydrotalcite and stirring for 2 hours. Next, 720.5 g of propylene glycol monomethyl ether acetate (Dow Chemical Company; relative permittivity at 20°C, 8.3) was added, volatile constituents such as methanol were distilled off under reduced pressure, and filtration under applied pressure was carried out.

The resulting composition was a liquid which had a viscosity of 20.2 mPa·s, a nonvolatiles content of 53.5 wt% and, excluding the solvent, a silicone component weight-average molecular weight of 7,500, and which was viscous at 25°C. The values of "a" to "e" in average formula (I) were respectively a = 0, b = 0.96, c = 0, d = 0.04 and e = 0.14.

### [Example 1-3]

Methyltrimethoxysilane (KBM-13, from Shin-Etsu Chemical Co., Ltd.) in an amount of 598.0 g (4.0 mol), 423.0 g (2.0 mol) of phenyltrimethoxysilane (KBM-103, from Shin-Etsu Chemical Co., Ltd.) and 3.5 g of methanesulfonic acid were blended in a reactor until uniform, at which point 194.4 g of deionized water was added and the mixture was stirred at 80°C for 2 hours. Neutralization was then carried out by adding 15.2 g of synthetic hydrotalcite and stirring for 2 hours. Next, 667.0 g of propylene glycol monomethyl ether acetate (Dow Chemical Company; relative permittivity at 20°C, 8.3) was added, volatile constituents such as methanol were distilled off under reduced pressure, and filtration under applied pressure was carried out.

The resulting composition was a liquid which had a viscosity of 42.2 mPa·s, a nonvolatiles content of 52.5 wt% and, excluding the solvent, a silicone component weight-average molecular weight of 10,000. The values of "a" to "e" in average formula (I) were respectively a = 0, b = 1.0, c = 0, d = 0 and e = 0.23.

### [Example 1-4]

Methyltrimethoxysilane (KBM-13, from Shin-Etsu Chemical Co., Ltd.) in an amount of 299.0 g (2.0 mol), 387.0 g (3.0 mol) of dimethyldimethoxysilane (KBM-22, from Shin-Etsu Chemical Co., Ltd.), 634.5 g (3.0 mol) of phenyltrimethoxysilane (KBM-103, from Shin-Etsu Chemical Co., Ltd.), 126.5 g (0.5 mol) of diphenyldimethoxysilane (KBM-202, from Shin-Etsu Chemical Co., Ltd.) and 4.8 g of methanesulfonic acid were blended in a reactor until uniform, at which point 237.6 g of deionized water was added and the mixture was stirred at 80°C for 2 hours. Neutralization was then carried out by adding 23.6 g of synthetic hydrotalcite and stirring for 2 hours. Next, 984.8 g of propylene glycol monomethyl ether acetate (Dow Chemical Company; relative permittivity at 20°C, 8.3) was added, volatile constituents such as methanol were distilled off under reduced pressure, and filtration under applied pressure was carried out.

The resulting composition was a liquid which had a viscosity of 12.9 mPa s, a nonvolatiles content of 50.6 wt% and, excluding the solvent, a silicone component weight-average molecular weight of 3,600. The values of "a" to "e" in average formula (I) were respectively a = 0, b = 0.66, c = 0.34, d = 0 and e = 0.12.

### [Example 1-5]

Tetramethoxysilane (from Tokyo Chemical Industry Co., Ltd.) in an amount of 30.4 g (0.2 mol), 299.0 g (2.0 mol) of methyltrimethoxysilane (KBM-13, from Shin-Etsu Chemical Co., Ltd.), 387.1 g (3.0 mol) of dimethyldimethoxysilane (KBM-22, from Shin-Etsu Chemical Co., Ltd.), 803.7 g (3.8 mol) of phenyltrimethoxysilane (KBM-103, from Shin-Etsu Chemical Co., Ltd.), 25.3 g (0.1 mol) of diphenyldimethoxysilane (KBM-202, from Shin-Etsu Chemical Co., Ltd.) and 4.9 g of methanesulfonic acid were blended in a reactor until uniform, at which point 254.9 g of deionized water was added and the mixture was stirred at 80°C for 2 hours. Neutralization was then carried out by adding 23.9 g of synthetic hydrotalcite and stirring for 2 hours. Next, 984.8 g of propylene glycol monomethyl ether acetate (Dow Chemical Company; relative permittivity at 20°C, 8.3) was added, volatile constituents such as methanol were distilled off under reduced pressure, and filtration under applied pressure was carried out.

The resulting composition was a liquid which had a viscosity of 19.9 mPa s, a nonvolatiles content of 50.3 wt% and, excluding the solvent, a silicone component weight-average molecular weight of 3,900. The values of "a" to "e" in average formula (I) were respectively a = 0.03, b = 0.64, c = 0.33, d = 0 and e = 0.11.

### [Example 1-6]

Tetramethoxysilane (from Tokyo Chemical Industry Co., Ltd.) in an amount of 30.4 g (0.2 mol), 32.4 g (0.2 mol) of hexamethyldisiloxane (Tokyo Chemical Industry Co., Ltd.), 313.7 g (2.1 mol) of methyltrimethoxysilane (KBM-13, from Shin-Etsu Chemical Co., Ltd.), 386.9 g (3.0 mol) of dimethyldimethoxysilane (KBM-22, from Shin-Etsu Chemical Co., Ltd.), 778.7 g (3.6 mol) of phenyltrimethoxysilane (KBM-103, from Shin-Etsu Chemical Co., Ltd.), 20.8 g (0.1 mol) of diphenyldimethoxysilane (KBM-202, from Shin-Etsu Chemical Co., Ltd.) and 4.8 g of methanesulfonic acid were blended in a reactor until uniform, at which point 253.2 g of deionized water was added and the mixture was stirred at 80°C for 2 hours. Neutralization was then carried out by adding 23.9 g of synthetic hydrotalcite and stirring for 2 hours. Next, 990.8 g of propylene glycol monomethyl ether acetate (Dow Chemical Company; relative permittivity at 20°C, 8.3) was added, volatile constituents such as methanol were distilled off under reduced pressure, and filtration under applied pressure was carried out.

The resulting composition was a liquid which had a viscosity of 22.2 mPa·s, a nonvolatiles content of 51.2 wt% and, excluding the solvent, a silicone component weight-average molecular weight of 4,800. The values of "a" to "e" in average formula (I) were respectively a = 0.03, b = 0.62, c = 0.32, d = 0.03 and e = 0.11.

### [2] Preparation of Compositions Containing No Alkylene Glycol Alkyl Ether Acetate Solvent

### [Comparative Example 1-1]

Hexamethyldisiloxane (from Tokyo Chemical Industry Co., Ltd.) in an amount of 32.4 g (0.2 mol), 299.0 g (2.0 mol) of methyltrimethoxysilane (KBM-13, from Shin-Etsu Chemical Co., Ltd.), 387.1 g (3.0 mol) of dimethyldimethoxysilane (KBM-22, from Shin-Etsu Chemical Co., Ltd.), 803.7 g (3.8 mol) of phenyltrimethoxysilane (KBM-103, from Shin-Etsu Chemical Co., Ltd.), 25.3 g (0.1 mol) of diphenyldimethoxysilane (KBM-202, from Shin-Etsu Chemical Co., Ltd.), 4.9 g of methanesulfonic acid and 990.2 g of xylene (relative permittivity at 20°C, 2.37) were blended in a reactor until uniform, at which point 254.9 g of deionized water was added and the mixture was stirred at 80°C for 2 hours. Neutralization was then carried out by adding 5.0 g of sodium bicarbonate and stirring for 2 hours. Methanol was distilled off under reduced pressure, after which the sodium bicarbonate was removed by rinsing with water and volatile constituents were removed by again distilling under reduced pressure, following which the composition was purified by filtration under applied pressure.

The resulting composition was a liquid which had a viscosity of 10 mPa s, a nonvolatiles content of 49.4 wt% and, excluding the solvent, a silicone component weight-average molecular weight of 5,000. The values of "a" to "e" in average formula (I) were respectively a = 0, b = 0.64, c = 0.33, d = 0.03 and e = 0.13.

### [Comparative Example 1-2]

Hexamethyldisiloxane (from Tokyo Chemical Industry Co., Ltd.) in an amount of 6.6 g (0.04 mol), 148.0 g (1.0 mol) of methyltrimethoxysilane (KBM-13, from Shin-Etsu Chemical Co., Ltd.), 111.7 g (0.5 mol) of phenyltrimethoxysilane (KBM-103, from Shin-Etsu Chemical Co., Ltd.), 0.8 g of methanesulfonic acid and 160.0 g of xylene (relative permittivity at 20°C, 2.37) were blended in a reactor until uniform, at which point 49.8 g of deionized water was added and the mixture was stirred at 80°C for 2 hours. Neutralization was then carried out by adding 0.9 g of sodium bicarbonate and stirring for 2 hours. Methanol was distilled off under reduced pressure, after which the sodium bicarbonate was removed by rinsing with water and volatile constituents were removed by again distilling under reduced pressure, following which the composition was purified by filtration under applied pressure.

The resulting composition was a liquid which had a viscosity of 15 mPa s, a nonvolatiles content of 52.4 wt% and, excluding the solvent, a silicone component weight-average molecular weight of 6,200. The values of "a" to "e" in average formula (I) were respectively a = 0, b = 0.96, c = 0, d = 0.04 and e = 0.17.

### [Comparative Example 1-3]

Methyltrimethoxysilane (KBM-13, from Shin-Etsu Chemical Co., Ltd.) in an amount of 148.0 g (1.0 mol), 111.7 g (0.5 mol) of phenyltrimethoxysilane (KBM-103, from Shin-Etsu Chemical Co., Ltd.), 0.8 g of methanesulfonic acid and 160.0 g of xylene (relative permittivity at 20°C, 2.37) were blended in a reactor until uniform, at which point 49.2 g of deionized water was added and the mixture was stirred at 80°C for 2 hours. Neutralization was then carried out by adding 0.9 g of sodium bicarbonate and stirring for 2 hours. Methanol was distilled off under reduced pressure, after which the sodium bicarbonate was removed by rinsing with water and volatile constituents were removed by again distilling under reduced pressure, following which the composition was purified by filtration under applied pressure.

The resulting composition was a liquid which had a viscosity of 25 mPa s, a nonvolatiles content of 51.9 wt% and, excluding the solvent, a silicone component weight-average molecular weight of 8,500. The values of "a" to "e" in average formula (I) were respectively a = 0, b = 1.0, c = 0, d = 0 and e = 0.21.

### [Comparative Example 1-4]

Methyltrimethoxysilane (KBM-13, from Shin-Etsu Chemical Co., Ltd.) in an amount of 29.9 g (0.2 mol), 38.3 g (0.3 mol) of dimethyldimethoxysilane (KBM-22, from Shin-Etsu Chemical Co., Ltd.), 80.4 g (0.4 mol) of phenyltrimethoxysilane (KBM-103, from Shin-Etsu Chemical Co., Ltd.), 2.5 g (0.01 mol) of diphenyldimethoxysilane (KBM-202, from Shin-Etsu Chemical Co., Ltd.), 0.5 g of methanesulfonic acid and 100.0 g of xylene (relative permittivity at 20°C, 2.37) were blended in a reactor until uniform, at which point 25.3 g of deionized water was added and the mixture was stirred at 80°C for 2 hours. Neutralization was then carried out by adding 0.6 g of sodium bicarbonate and stirring for 2 hours. Methanol was distilled off under reduced pressure, after which the sodium bicarbonate was removed by rinsing with water and volatile constituents were removed by again distilling under reduced pressure, following which the composition was purified by filtration under applied pressure.

The resulting composition was a liquid which had a viscosity of 10 mPa s, a nonvolatiles content of 49.4 wt% and, excluding the solvent, a silicone component weight-average molecular weight of 5,000. The values of "a" to "e" in average formula (I) were respectively a = 0, b = 0.66, c = 0.34, d = 0 and e = 0.13.

### [Comparative Example 1-5]

Tetramethoxysilane (from Tokyo Chemical Industry Co., Ltd.) in an amount of 30.4 g (0.2 mol), 299 g (2.0 mol) of methyltrimethoxysilane (KBM-13, from Shin-Etsu Chemical Co., Ltd.), 387.0 g (3.0 mol) of dimethyldimethoxysilane (KBM-22, from Shin-Etsu Chemical Co., Ltd.), 803.7 g (3.8 mol) of phenyltrimethoxysilane (KBM-103, from Shin-Etsu Chemical Co., Ltd.), 25.3 g (0.1 mol) of diphenyldimethoxysilane (KBM-202, from Shin-Etsu Chemical Co., Ltd.), 4.9 g of methanesulfonic acid and 1,000.0 g of xylene (relative permittivity at 20°C, 2.37) were blended in a reactor until uniform, at which point 254.9 g of deionized water was added and the mixture was stirred at 80°C for 2 hours. Neutralization was then carried out by adding 5.0 g of sodium bicarbonate and stirring for 2 hours. Methanol was distilled off under reduced pressure, after which the sodium bicarbonate was removed by rinsing with water and volatile constituents were removed by again distilling under reduced pressure, following which the composition was purified by filtration under applied pressure.

The resulting composition was a liquid which had a viscosity of 32.8 mPa·s, a nonvolatiles content of 53.3 wt% and, excluding the solvent, a silicone component weight-average molecular weight of 7,600. The values of "a" to "e" in average formula (I) were respectively a = 0.03, b = 0.64, c = 0.33, d = 0 and e = 0.17.

### [Comparative Example 1-6]

Hexamethyldisiloxane (from Tokyo Chemical Industry Co., Ltd.) in an amount of 32.4 g (0.2 mol), 30.4 g (0.2 mol) of tetramethoxysilane (Tokyo Chemical Industry Co., Ltd.), 299 g (2.0 mol) of methyltrimethoxysilane (KBM-13, from Shin-Etsu Chemical Co., Ltd.), 387.0 g (3.0 mol) of dimethyldimethoxysilane (KBM-22, from Shin-Etsu Chemical Co., Ltd.), 803.7 g (3.8 mol) of phenyltrimethoxysilane (KBM-103, from Shin-Etsu Chemical Co., Ltd.), 25.3 g (0.1 mol) of diphenyldimethoxysilane (KBM-202, from Shin-Etsu Chemical Co., Ltd.), 4.9 g of methanesulfonic acid and 1,000.0 g of xylene (relative permittivity at 20°C, 2.37) were blended in a reactor until uniform, at which point 254.9 g of deionized water was added and the mixture was stirred at 80°C for 2 hours. Neutralization was then carried out by adding 5.0 g of sodium bicarbonate and stirring for 2 hours. Methanol was distilled off under reduced pressure, after which the sodium bicarbonate was removed by rinsing with water and volatile constituents were removed by again distilling under reduced pressure, following which the composition was purified by filtration under applied pressure.

The resulting composition was a liquid which had a viscosity of 12 mPa s, a nonvolatiles content of 50.9 wt% and, excluding the solvent, a silicone component weight-average molecular weight of 4,900. The values of "a" to "e" in average formula (I) were respectively a = 0.03, b = 0.63, c = 0.31, d = 0.03 and e = 0.11.

### [3] Production of Coated Articles

### [Examples 2-1 to 2-6, Comparative Examples 2-1 to 2-6]

Five parts by weight of aluminum alkoxide compounds (DX-9740, from Shin-Etsu Chemical Co., Ltd.; a mixture of aluminum ethyl acetoacetate di-n-butyrate and aluminum bis(ethyl acetoacetate) mono-n-butyrate) as the curing catalyst was added to 100 parts by weight of the compositions obtained in Examples 1-1 to 1-6 and Comparative Examples 2-1 to 2-6, the resulting compositions were applied onto a metal substrate by flow coating, and baking was carried out by 30 minutes of heating in a 180°C dryer. The component (B) content within the compositions of Examples 2-1 to 2-6 was 15 wt% or more. The resulting coated articles were subjected to a rubbing test and their pencil hardnesses were evaluated. The results are shown in Table 1.

### (1) Rubbing Test

A Bemcot M-311 wipe (Asahi Kasei Corporation; surface area, 4 cm²) was wetted with acetone and then rubbed back-and-forth 30 times over the surface of the coated article under a load of 500 g, following which the appearance of the applied film was visually assessed. Coated articles for which no change in the appearance of the film was observed following the rubbing test as compared with before the test were rated as "OK"; those in which peeling or clouding of the applied film was observed were rated as "NG."

### (2) Pencil Hardness

The pencil hardness was measured under a load of 750 g in accordance with JIS K5600-5-4. Cases in which scratching with a 6B pencil was observed were rated as "<6B."

### [Examples 3-1 to 3-6, Comparative Examples 3-1 to 3-6]

Aside from baking the applied compositions by 60 minutes of heating in a 180°C dryer, the compositions of Examples 3-1 to 3-6 and Comparative Examples 3-1 to 3-6 were prepared in the same way as in Examples 2-1 to 2-6 and Comparative Examples 2-1 to 2-6, and evaluations of the applied film on the resulting coated articles were similarly carried out. The results are shown in Table 2.

### [Examples 4-1 to 4-6, Comparative Examples 4-1 to 4-6]

Aside from baking the applied compositions by 120 minutes of heating in a 180°C dryer, the compositions of Examples 4-1 to 4-6 and Comparative Examples 4-1 to 4-6 were prepared in the same way as in Examples 2-1 to 2-6 and Comparative Examples 2-1 to 2-6, and evaluations of the applied film on the resulting coated articles were similarly carried out. The results are shown in Table 3.

**[Table 1]**

| | Composition | Time | Rubbing test | Pencil hardness |
|---|---|---|---|---|
| Example 2-1 | Example 1-1 | 30 minutes | OK | 4B |
| Example 2-2 | Example 1-2 | 30 minutes | OK | 2B |
| Example 2-3 | Example 1-3 | 30 minutes | OK | 2B |
| Example 2-4 | Example 1-4 | 30 minutes | OK | 4B |
| Example 2-5 | Example 1-5 | 30 minutes | OK | 4B |
| Example 2-6 | Example 1-6 | 30 minutes | OK | 3B |
| Comparative Example 2-1 | Comparative Example 1-1 | 30 minutes | NG | <6B |
| Comparative Example 2-2 | Comparative Example 1-2 | 30 minutes | NG | 5B |
| Comparative Example 2-3 | Comparative Example 1-3 | 30 minutes | NG | 5B |
| Comparative Example 2-4 | Comparative Example 1-4 | 30 minutes | NG | <6B |
| Comparative Example 2-5 | Comparative Example 1-5 | 30 minutes | NG | 6B |
| Comparative Example 2-6 | Comparative Example 1-6 | 30 minutes | NG | <6B |

**[Table 2]**

| | Composition | Time | Rubbing test | Pencil hardness |
|---|---|---|---|---|
| Example 3-1 | Example 1-1 | 60 minutes | OK | 3B |
| Example 3-2 | Example 1-2 | 60 minutes | OK | HB |
| Example 3-3 | Example 1-3 | 60 minutes | OK | HB |
| Example 3-4 | Example 1-4 | 60 minutes | OK | 3B |
| Example 3-5 | Example 1-5 | 60 minutes | OK | B |
| Example 3-6 | Example 1-6 | 60 minutes | OK | B |
| Comparative Example 3-1 | Comparative Example 1-1 | 60 minutes | OK | 6B |
| Comparative Example 3-2 | Comparative Example 1-2 | 60 minutes | OK | 4B |
| Comparative Example 3-3 | Comparative Example 1-3 | 60 minutes | OK | 4B |
| Comparative Example 3-4 | Comparative Example 1-4 | 60 minutes | OK | 6B |
| Comparative Example 3-5 | Comparative Example 1-5 | 60 minutes | OK | 5B |
| Comparative Example 3-6 | Comparative Example 1-6 | 60 minutes | OK | 4B |

**[Table 3]**

| | Composition | Time | Rubbing test | Pencil hardness |
|---|---|---|---|---|
| Example 4-1 | Example 1-1 | 120 minutes | OK | HB |
| Example 4-2 | Example 1-2 | 120 minutes | OK | H |
| Example 4-3 | Example 1-3 | 120 minutes | OK | H |
| Example 4-4 | Example 1-4 | 120 minutes | OK | HB |
| Example 4-5 | Example 1-5 | 120 minutes | OK | HB |
| Example 4-6 | Example 1-6 | 120 minutes | OK | H |
| Comparative Example 4-1 | Comparative Example 1-1 | 120 minutes | OK | 4B |
| Comparative Example 4-2 | Comparative Example 1-2 | 120 minutes | OK | 2B |
| Comparative Example 4-3 | Comparative Example 1-3 | 120 minutes | OK | 2B |
| Comparative Example 4-4 | Comparative Example 1-4 | 120 minutes | OK | 4B |
| Comparative Example 4-5 | Comparative Example 1-5 | 120 minutes | OK | 3B |
| Comparative Example 4-6 | Comparative Example 1-6 | 120 minutes | OK | 3B |

As shown in Table 1, in Examples 2-1 to 2-6 containing component (B), a cured film that withstands the acetone rubbing test was obtained with 30 minutes of heating at 180°C. By contrast, in Comparative Examples 2-1 to 2-6 containing no component (B), the surface of the cured film obtained with 30 minutes of heating at 180°C was observed to cloud when subjected to acetone rubbing.

With regard to the pencil hardness when the applied film has been heated for 60 minutes at 180°C, as shown in Table 2, a tendency for the pencil hardness to become harder than in Comparative Examples 3-1 to 3-6 is clearly apparent in Examples 3-1 to 3-6, and so this demonstrates that curing is promoted by component (B).

In addition, as is apparent from the results in Table 3 obtained by carrying out heating for a longer period of 120 minutes at 180°C, the films obtained in Examples 4-1 to 4-6 had high hardnesses of HB or more, whereas the films obtained in Comparative Examples 4-1 to 4-6 were soft films having hardnesses of 2B or less.

That is, compared with the compositions containing no component (B) in the Comparative Examples, the component (B)-containing compositions in the Examples according to the invention cured at a low temperature to give coated articles of a high hardness.

## Claims

1. A composition comprising (A) an organopolysiloxane having a structure of average formula (I) below and (B) at least 15 wt% of a solvent having a relative permittivity of at least 7.0 and not more than 9.0 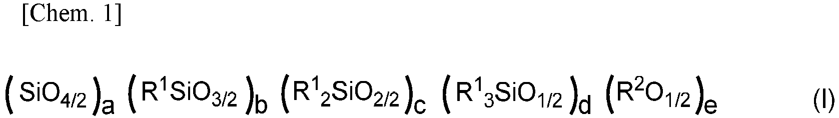 (wherein each R¹ is independently a hydrogen atom or an alkyl, aralkyl or aryl group of 1 to 8 carbon atoms which may be substituted with a halogen atom; R² is a hydrogen atom, methyl group, ethyl group, n-propyl group, i-propyl group or acetyl group; a, b, c and d are respectively numbers which satisfy the conditions 0 ≤ a < 1, 0 < b ≤ 1, 0 ≤ c < 1, 0 ≤ d < 1 and a+b+c+d = 1; and e is a number which satisfies the condition 0 < e ≤ 4).

2. The composition of claim 1, wherein the solvent (B) includes a compound of general formula (II) below 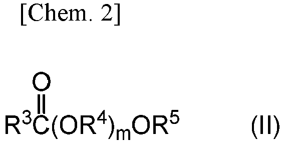 (wherein R³ is an alkyl group of 1 to 4 carbon atoms, R⁴ is a linear or branched alkylene group of 1 to 4 carbon atoms, R⁵ is an alkyl group of 1 to 4 carbon atoms or a group of the following formula 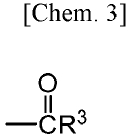 (wherein R³ is the same as above), and m is an integer from 1 to 3).

3. The composition of claim 1 or 2, wherein the organopolysiloxane (A) has a weight-average molecular weight of from 1,000 to 500,000.

4. The composition of any one of claims 1 to 3 which is a curable composition that further comprises a curing catalyst.

5. A coating material comprising the composition of any one of claims 1 to 4.

6. A cured film of the coating material of claim 5.

7. A coated article comprising a substrate and, formed on at least one side of the substrate, either directly or over one or more other layer, the cured film of claim 6.

8. A method for preparing the composition of any one of claims 1 to 4, comprising the steps of synthesizing (A) the organopolysiloxane having a structure of average formula (I) by hydrolytically condensing a silane compound having a hydrolyzable group in the absence of (B) a solvent having a relative permittivity of at least 7.0 and not more than 9.0; and subsequently adding (B) the solvent having a relative permittivity of at least 7.0 and not more than 9.0.
